Europäisches Patentamt

European Patent Office

Office européen des brevets

(11) Veröffentlichungsnummer: **0 095 514 B1**

(12) **EUROPÄISCHE PATENTSCHRIFT**

(45) Veröffentlichungstag der Patentschrift:
16.10.85

(21) Anmeldenummer: **82104691.9**

(22) Anmeldetag: **28.05.82**

(51) Int. Cl.⁴: **H 04 N 1/40**

(54) Verfahren und Einrichtung zur Reproduktion eines Bildes mit gröberer Auflösung als bei der Bildabtastung.

(43) Veröffentlichungstag der Anmeldung:
**07.12.83 Patentblatt 83/49**

(45) Bekanntmachung des Hinweises auf die Patenterteilung:
**16.10.85 Patentblatt 85/42**

(84) Benannte Vertragsstaaten:
**AT BE CH DE FR GB IT LI NL SE**

(56) Entgegenhaltungen:
**DE - B - 2 712 025**
**FR - A - 2 461 414**
**GB - A - 2 022 966**
**US - A - 3 996 421**

**XEROX DISCLOSURE JOURNAL, Band 4, Nr. 6, November/Dezember 1979, Seiten 805-807, Stamford Connecticut, USA J.L. POTTER: "A density preserving digital image magnifier/reducer"**

(73) Patentinhaber: **DR.-ING. RUDOLF HELL GmbH, Grenzstrasse 1-5, D-2300 Kiel 14 (DE)**

(72) Erfinder: **Gall, Winrich, Fasanenweg 15, D-2300 Klausdorf (DE)**
Erfinder: **Weselmann, Peter, Bahrenfelder Kirchenweg 7, D-2000 Hamburg 50 (DE)**

## Beschreibung

### Technisches Gebiet

Die vorliegende Erfindung betrifft ein Verfahren zur Reproduktion eines Bildes mit gröberer Auflösung als bei der Bildabtastung, wobei das Originalbild optoelektronisch punkt- und zeilenweise mit einer vorgegebenen Feinauflösung abgetastet wird und die dabei gewonnenen Bildsignale in digitale Bildsignale umgewandelt und digital gespeichert werden, wobei die gespeicherten digitalen Bildsignale jeweils einem Feinbildpunkt des Originals entsprechen. Die Erfindung bezieht sich auf das Gebiet der Reproduktionstechnik im allgemeinen und insbesondere auf das Gebiet der Bildverarbeitung in der Drucktechnik.

### Stand der Technik

In der Drucktechnik ist es bekannt, mittels sogenannter Scanner ein Bild optoelektronisch abzutasten und eine Druckform herzustellen. Hierbei werden Farbkorrekturen und Gradationsänderungen an den elektronischen Bildsignalen vorgenommen. Das Resultat dieser Korrekturen ist normalerweise erst am endgültigen Druckprodukt erkennbar. Um aber bereits schon vor dem Druck beurteilen zu können, ob die Druckform qualitätsmässig den Anforderungen entspricht, die an die endgültige Reproduktion gestellt werden, setzt man sogenannte Farbwertbeurteilungsgeräte ein, bei denen auf einem Monitor das Farbbild wiedergegeben wird, und zwar möglichst genau so, wie es im endgültigen Druck erscheint (siehe z.B. DE-AS Nr. 2607623). Bei diesen Geräten kann nur jeweils ein Bild zur Anzeige gebracht werden, und zwar in einem Format, das der Grösse des Monitors entspricht oder kleiner als der Monitor ist.

Bei modernen Bildverarbeitungssystemen besteht aber der Wunsch, auch grössere Bilder bzw. Bildmontagen wie Ganzseiten zur Anzeige zu bringen, wozu es wegen der Auflösung des Monitors erforderlich ist, die Anzahl der wiedergegebenen Bildpunkte entgegen der Auflösung bei der Abtastung entsprechend zu reduzieren. In der DE-B2-2712025 ist eine Anordung zur Änderung des Formats eines Fernsehbildes beschrieben. Eine Formatänderung im Sinne einer Bildzusammendrukkung wird durch Überspringen einzelner Zeilen vorgenommen. Bei einer Formatänderung im Sinne einer Dehnung, werden die Bildsignale wiederholt, d.h. die entsprechende Bildinformation dient als Füllinformation für das grössere Format, wird also mehrfach verwendet.

Es wird hier also einfach Information weggelassen bzw. wiederholt. Dies führt zu einer Verschlechterung der Bildqualität, was für die Zwecke der Drucktechnik, bei der extrem feine Farbkorrekturen noch sichtbar gemacht werden sollen, von Nachteil ist.

### Aufgabenstellung

Der vorliegenden Erfindung liegt daher die Aufgabe zugrunde, ein Verfahren und eine Einrichtung anzugeben, mit der ein Bild mit gröberer Auflösung wiedergegeben wird, als die Auflösung bei der Bildabtastung selbst war, ohne dass ein grösserer Informationsverlust stattfindet.

Die Erfindung erreicht dies durch die im kennzeichnenden Teil des Anspruchs 1 angegeben Merkmale. Vorteilhafte Weiterbildungen sind in den Unteransprüchen 2 bis 9 beschrieben.

Die Erfindung wird im folgenden anhand der Fig. 1 bis 4 näher dargelegt. Es zeigen:

Fig. 1 ein Prinzip-Schaltbild der Erfindung,

Fig. 2 ein Feld von Bildpunkten, das für die Erzeugung eines Grobbildpunktes herangezogen wird,

Fig. 3, eine Dreiecksfunktion für den Verlauf der Bewertung der Umfeldpunkt zur Bildung der Grobbildpunkte, und

Fig. 4 ein weiteres Beispiel für den Verlauf der Bewertung der Umfeldpunkte.

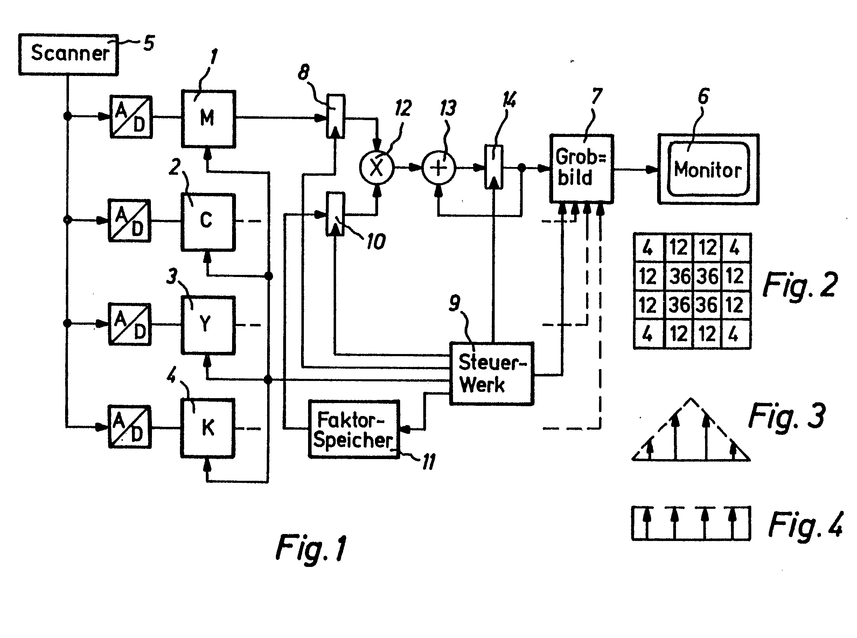

In Fig. 1 wird davon ausgegangen, dass die zu reproduzierenden Bilder bereits mittels der heute üblichen Scanner punkt- und zeilenweise optoelektronisch abgetastet wurden und in Form von digitalen Bildsignalen in einem Speicher abgelegt sind. Es kann sich bei den gespeicherten Bildsignalen um einzelne Bilder oder aber auch um bereits fertig montierte und korrigierte ganze Magazinseiten handeln, die als Grobbild auf einem Farbmonitor wiedergeben werden sollen. Es sind daher für jeden Farbauszug, Magenta (M), Cyan (C), Gelb (Y) und Schwarz (K) Bildspeicher 1, 2, 3 und 4 vorgesehen, in denen die Farbauszugssignale bereits in digitalisierter Form vorliegen. Die Farbauszugssignale sind mittels eines Scanners 5 in einer Auflösung abgetastet und digitalisiert worden, die der Auflösung des Rasters beim endgültigen Druck entspricht und sollen mit einer gröberen Auflösung auf einem Monitor 6 sichtbar gemacht werden. Hierzu sind die Bildspeicher 1, 2, 3 und 4 für die einzelnen Farbauszüge jeweils über eine Einrichtung, welche die gespeicherten Bildsignale in neue Bildsignale für das Grobbild umwandelt mit einem Speicher 7, verbunden, in dem die Bildsignale des Grobbildes abgelegt sind, damit sie für die fernsehmässige Aufzeichnung auf dem Monitor 6, die mit einer entsprechenden Bildwiederholfrequenz erfolgt, bereitstehen. Der Speicher 7 kann z.B. ein käuflicher Bildwiederholspeicher sein, aus dem die Bildsignale entsprechend der Fernsehnorm laufend entnommen werden. Der Einfachheit halber ist die Schaltung zur Umwandlung des Feinbildes in das Grobbild nur einmal dargestellt, sie ist aber selbstverständlich in jedem Kanal zwischen den Bildspeichern 1, 2, 3 und 4 und dem Speicher 7 vorhanden.

Scanner 5 und Monitor 6 sind handelsübliche Baueinheiten, so dass auf eine detaillierte Beschreibung verzichtet werden kann.

Prinzipiell wird die Umwandlung des Feinbildes in das Grobbild bzw. Übersichtsbild derart vorgenommen, dass aus den digitalen Bildsignalen des Feinbilds eine solche Anzahl von Bildpunkten herausgegriffen wird, wie sie auf einen Grobbild bzw. Übersichtsbildpunkt entfallen. Diese Anzahl ergibt sich aus dem Massstab, mit dem das Feinbild in das Übersichtsbild umgewandelt werden soll. Die Bildsignale dieser Bildpunkte des Feinbildes werden einzeln bewertet, zu einem Summensignal aufaddiert und erbeben so einen einzigen Bildsignalwert, der insgesamt für die Bildpunkte des Felds repräsentativ ist und zur Aufzeichnung gebracht wird. Zur Durchführung dieses Verfahrens ist mit dem Farbauszugsspeicher 1 ein erstes Register 8 verbunden, das von einem Steuerwerk 9 getaktet wird. Ausserdem ist ein zweites Register 10 vorgesehen, dessen Eingang mit einem weiteren Speicher 11 verbunden ist, der für die einzelnen Bildpunkte des Feldes, aus dem der jeweilige Grobbildpunkt gebildet werden soll, die entsprechenden Bewertungsfaktoren für die Bildsignale enthält. Dieses zweite Register ist ebenfalls mit dem Steuerwerk 9 verbunden und wird von diesem aus synchron mit dem ersten Register 8 getaktet. Weiterhin ist der Speicher 11 mit dem Steuerwerk 9 verbunden, damit bei dem jeweiligen Takt, bei dem die beiden vorgenannten Register getaktet werden, die entsprechenden Faktoren aus dem Speicher 11 ausgelesen werden können. Die Ausgänge der Register 8 und 10 sind auf einem Multiplizierer 12 geschaltet, dessen Ausgang an einem Eingang eines Addierers 13 liegt. Dem Addierer 13 ist ein drittes Register 14 nachgeschaltet, dessen Ausgang einmal an dem Grobbildspeicher 7 liegt und zum anderen mit dem zweiten Eingang des Addierers 13 verbunden ist. Das Register 14 ist ebenfalls mit dem Steuerwerk 9 über eine Taktleitung verbunden. Ausserdem liefert das Steuerwerk 9 die Takte für das Einschreiben der Bildsignale der Grobbildpunkte in den Speicher 7.

Für die Register 8, 10 und 14 können auch andere entsprechend schnelle Speicher als Pufferspeicher verwendet werden.

Fig. 2 zeigt ein Feld von 4 × 4 Bildpunkten des Feinbildes, aus denen ein Grobbildpunkt erzeugt werden soll. In diese Felder sind die Bewertungsfaktoren als Zahlenwerte eingetragen, mit denen die Bildsignale der einzelnen Bildpunkte des Feinbildes bewertet werden. Nach der Bewertung werden die einzelnen Bildsignale aufsummiert und das Resultat stellt das Bildsignal eines einzigen Tonwertes dar, der für diese Grobbildpunkte repräsentativ ist. In der Schaltung gemäss Fig. 1 erfolgt dies derart, dass das Signal eines Bildpunktes aus dem Farbauszugsspeicher 1 in das Register 8 eingegeben wird, gleichzeitig wird der entsprechende Faktor, der zu diesem Feld der Fig. 2 gehört, in das Register 10 eingegeben, und das Bildsignal wird mit diesem Faktor im Multiplizierer 12 malgenommen. Das Resultat wird auf einen Eingang des Addierers 13 gegeben, und das Ausgangssignal des Addierers wird mittels des Steuerwerks in das Register 14 eingeschrieben. Dann wird das Bildsignal des nächsten Feinbildpunktes in das Register 8 gegeben, der entsprechende Faktor in das Register 10 und das Produkt wieder an den Eingang des Addierers 13 angelegt. Im Addierer 13 wird dann der Inhalt des Registers 14, d.h. das mit dem Faktor bewertete Bildsignal des vorangehenden Bildpunktes, über die Rückkopplungsschleife, d.h. die Verbindung des Ausgangs des Registers 14 mit dem zweiten Eingang des Addierers 13, hinzuaddiert. Das Resultat wird wiederum im Register 14 gespeichert. Für den nächsten Bildpunkt erfolgt der gleiche Ablauf, und zwar solange, bis alle Bildsignale des Feldes der Fig. 2 bewertet und zu einem neuen Bildsignal zusammengefasst sind. Dieses Signal wird beim letzten Bildpunkt des Feldes der Fig. 2 in den Speicher 7 eingegeben. Hierbei ist zu beachten, dass durch diese ständige Multiplikation und Aufaddition sich ein viel zu hoher Wert für das Bildsignal des Grobbildpunktes ergibt. Da dieses Signal in digitaler Form vorliegt, kann dieser Fehler leicht derart korrigiert werden, dass nur die Leitungen für die höherwertigen Bits zwischen dem Register 14 und dem Speicher 7 ausgeführt sind, so dass die restlichen Bits abgestreift werden. Der Speicher 7 kann so ausgebildet sein, dass für jeden Farbauszug ein separater Bildsignalspeicher vorhanden ist, es kann aber insgesamt auch ein einziger grosser Speicher verwendet werden, der entsprechende Speicherbereiche mit genügender Kapazität zur Aufnahme der Bildsignale des Grobbildes aufweist.

Es ist aber auch möglich, die Anpassung an den tatsächlichen Wert des Bildsignals des jeweiligen Grobbildpunktes zwischen Grobbildspeicher und Monitor vorzunehmen, indem z.B. zwischen Grobbildspeicher und Monitor ein Multiplexer vorgesehen ist, der die entsprechenden hochwertigsten Bits auswählt (z.B. 8 Bit bis 24 Bit).

Fig. 3 zeigt eine Dreiecksfunktion, entsprechend der die Bewertung der Bildpunkte des Feinbildes vom Zentrum des Feldes der Fig. 2 aus mit abnehmender Tendenz vorgenommen werden kann. Eine weitere Möglichkeit besteht darin, die Bildsignale der Bildpunkte des Feldes 2 mit einem gleichen Faktor zu bewerten, was in Fig. 4 dargestellt ist.

Es sei bemerkt, dass die Grösse des Feldes der Fig. 2 jeden beliebigen anderen Wert annehmen kann, wenn ein entsprechender anderer Massstabsfaktor zwischen Feinbild und Übersichtsbild gefordert ist. Es muss dann eine entsprechend grössere oder kleinere Anzahl von Feinbildpunkten in einen einzigen Grobbildpunkt umgewandelt werden. Hierbei können auch wieder vom Zentrum ausgehend gestufte Faktoren für die Bewertung der Bildsignale des jeweils herangezogenen Feldes von Feinbildpunkten oder aber auch gleichen Faktoren verwendet werden, wie dies in den Fig. 3 und 4 für ein Feld von 4 × 4 Feinbildpunkten dargestellt ist.

Es kann aber auch eine Bewertung entsprechend einer $\frac{\sin X}{X}$ -Funktion cos- oder cos²-Funktion oder anderer geeigneter Funktionen vorgenommen werden.

Auf die explizite Darstellung des Scanners 5 und des Monitors 6 wurde verzichtet, da dies seit langem in der Technik eingeführte Komponenten sind, die jedem Fachmann geläufig und als solches fertige Kaufteile sind.

## Patentansprüche

1. Verfahren zur Reproduktion eines Bildes mit gröberer Auflösung als bei der Bildabtastung, wobei das Originalbild optoelektronisch punkt- und zeilenweise mit einer vorgegebenen Feinauflösung abgetastet wird und die dabei gewonnenen Bildsignale in digitale Bildsignale umgewandelt und digital gespeichert werden, wobei die gespeicherten digitalen Bildsignale jeweils einem Feinbildpunkt des Originalbildes entsprechen, dadurch gekennzeichnet, dass aus den den digitalen Bildsignalen entsprechenden Bildpunkten ein Bildfeld herausgegriffen wird, welches so viele Feinbildpunkte enthält, wie auf einen Grobbildpunkt fallen sollen, dass für die einzelnen die Feinbildsignale repräsentierenden Bildpunkte dieses Bildfeldes eine Amplitudenbewertung nach einer vorgegebenen Funktion vorgenommen wird und dass durch Zusammenfassung der bewerteten Bildsignale ein entsprechendes Bildsignal für den Grobbildpunkt gewonnen wird.

2. Verfahren nach Anspruch 1, dadurch gekennzeichnet, dass die Bewertung vom Zentrum des Feldes, ausgehend zum Rand des Feldes hin, abnimmt.

3. Verfahren nach Anspruch 1, dadurch gekennzeichnet, dass die Bewertung entsprechend einer Dreiecksfunktion vorgenommen wird.

4. Verfahren nach Anspruch 2, dadurch gekennzeichnet, dass die Bewertung entsprechend einer Funktion $Y = \dfrac{\sin X}{X}$ vorgenommen wird.

5. Verfahren nach Anspruch 1, dadurch gekennzeichnet, dass alle Feinbildsignale der Feinbildpunkte des Bildfeldes mit etwa gleichem Faktor bewertet werden.

6. Verfahren nach Anspruch 5, dadurch gekennzeichnet, dass die Feinbildsignale der Feinbildpunkte des Bildfeldes mit gleichem Faktor bewertet werden.

7. Einrichtung zur Durchführung des Verfahrens nach Anspruch 1 mit Speichern (1, 2, 3, 4) für die digitalisierten mit feiner Auflösung abgetasteten Farbauszugssignale, dadurch gekennzeichnet, dass die Farbauszugsspeicher jeweils über einen ersten Zwischenspeicher (8) mit einem Eingang eines Multiplizierers (12) verbunden sind, an dessen zweitem Eingang ein zweiter Zwischenspeicher (10) angeschlossen ist, dessen Eingang mit einem weiteren Speicher (11) verbunden ist, der die Bewertungsfaktoren für die einzelnen Bildpunkte des den Grobbildpunkt umgebenden Feldes enthält, dass der Ausgang des Multiplizierers (12) mit einem Eingang eines Addierers (13) verbunden ist, dessen Ausgang am Eingang eines dritten Zwischenspeichers (14) liegt, dessen Ausgang mit einem das Grobbild aufnehmenden Speicher (7) und mit dem zweiten Eingang des Addierers (13) verbunden sind und dass die Speicher (1, 2, 3, 4) und Zwischenspeicher (8, 10, 14) mit ihren Takteingängen an einem Steuerwerk (9) angeschlossen sind, durch dessen Takte zur Erzeugung der Grobbildpunkte die Bildsignale der Bildpunkte des Feinbildes, die innerhalb des Feldes liegen, das den Grobbildpunkt umgibt, aus den Farbauszugsspeichern (1, 2, 3 und 4) jeweils in den ersten Zwischenspeicher (8) sowie die zu den einzelnen Bildpunkten des Feldes gehörenden Bewertungsfaktoren aus dem zweiten Speicher (11) in den zweiten Zwischenspeicher (10) übertragbar und von dem ersten und zweiten Zwischenspeicher (8, 10) an den Multiplizierer (12) anschaltbar sind und durch die die Ausgangssignale des mit dem Multiplizierer verbundenen Addierers (13) in den dritten Zwischenspeicher und vom dritten Zwischenspeicher (14) an den zweiten Eingang des Addierers (13) und den Grobbildspeicher (7) übertragbar sind.

8. Einrichtung nach Anspruch 7, dadurch gekennzeichnet, dass die Verbindung zwischen dem dritten Zwischenspeicher (14) und dem Grobbildspeicher (7) nur für die höherwertigen Bits des Ausgangssignals des dritten Speichers (14) ausgeführt ist, um das Eingangssignal für den Grobbildspeicher (7) auf den tatsächlichen Wert des Bildsignals des jeweiligen Grobbildpunktes zu reduzieren.

9. Einrichtung nach Anspruch 7, dadurch gekennzeichnet, dass die Verbindung zwischen dem Grobbildspeicher (7) und dem Monitor (6) nur für die Übertragung der höherwertigen Bits des Ausgangssignals des Grobbildspeichers (7) zum Monitor ausgebildet ist, um das Eingangssignal des Monitors (6) auf den tatsächlichen Wert des Bildsignals des jeweiligen Grobbildpunktes zu reduzieren.

## Claims

1. Process for reproduction of an image with coarser resolution than in the case of image scanning, the original image being scanned opto-electronically dot by dot and line by line with a preset fine resolution and the image signal obtained whilst doing so being converted into digital image signals and stored digitally, the stored digital image signals corresponding to a fine image dot of the original image in each case, characterized in that an image field is picked from the image dots corresponding to the digital image dots, which contains as many fine image dots as should coincide with a coarse image dot, that an amplitude evaluation is performed according to a preset function for the individual image dots of this image field representing the fine image dots, and that an appropriate image signal is obtained for the coarse image dot by combination of the evaluated image signal.

2. Process according to Claim 1, characterized in that the evaluation starting from the centre of the field diminishes towards the edge of the field.

3. Process according to Claim 1, characterized in that the evaluation is performed in accordance with a triangular function.

4. Process according to Claim 2, characterized in that the evaluation is performed according to a function $Y = \dfrac{\sin X}{X}$.

5. Process according to Claim 1, characterized in that all the fine image signals of the fine image dots of the image field are evaluated with an approximately identical factor.

6. Process according to Claim 5, characterized in that the fine image signals of the fine image dots of the image field are evaluated with the same factor.

7. A system for application of the process according to Claim 1, comprising memories (1, 2, 3, 4) for the digitized colour extract signals scanned with fine resolution, characterized in that the colour extract memories are in each case connected via an intermediate memory (8) to an input of a multiplier (12) whereof the second input has connected to it a second intermediate memory (10) whose input is connected to another memory (11) which contains the evaluation factors for the individual image dots of the field surrounding the coarse image dot, that the output of the multiplier (12) is connected to an input of a third intermediate memory (14) whose output is connected to a memory (7) receiving the coarse image and to the second input of the summator (13), and that the memories (1, 2, 3, 4) and intermediate (or buffer) memories (8, 10, 14) have their clock inputs connected to a control system (9) whose pulses may for the purpose of generating the coarse image dots cause the image signals of the image dots of the fine image lying within the field which surrounds the coarse image dot to be transferred from the colour extract memories (1, 2, 3 and 4) into the first intermediate memory (8) in each case and the evaluation factors appertaining to the individual image dots of the field to be transferred from the second memory (11) into the second intermediate memory (10) and to be connectable from the first and second intermediate memories (8, 10) to the multiplier (12), and to be transferred by the output signals of the summator (13) connected to the multiplier into the third intermediate memory and from the third intermediate memory (14) to the second input of the summator (13) and the coarse image memory (7).

8. A system according to Claim 7, characterized in that the connection between a third intermediate memory (14) and the coarse image memory (7) is provided only for the higher-value bits of the output signal of the third memory (14), in order to reduce the input signal for the coarse image memory (7) to the actual value of the image signal of the coarse image dot in question.

9. A system according to Claim 7, characterized in that the connection between the coarse image memory (7) and the monitor (6) is provided only for the transmission of the higher-value bits of the output signal of the coarse image memory (7) to the monitor, in order to reduce the input signal of the monitor (6) to the actual value of the image signal of the coarse image dot in question.

## Revendications

1. Procédé pour reproduire une image avec une résolution plus grossière que lors du balayage de l'image, l'image originale étant balayée opto-électroniquement par points et par lignes avec une résolution d'une finesse prédéfinie, et les signaux d'image alors obtenus étant convertis en signaux d'image numériques et mémorisés numériquement, les signaux numériques d'image ainsi mémorisés correspondant respectivement à un point d'image fine de l'image originale, procédé caractérisé en ce qu'à partir des points d'image correspondant aux signaux numériques d'image, on obtient un champ d'image qui contient autant de points d'image fine qu'il doit y en avoir sur un point d'image grossière, en ce qu'une évaluation d'amplitude est effectuée selon une fonction prédéfinie pour les différents points d'image, correspondant aux signaux d'image fine, de ce champ d'image et en ce qu'un signal d'image correspondant pour le point d'image grossière est obtenu en rassemblant les signaux d'image ainsi évalués.

2. Procédé selon la revendication 1, caractérisé en ce que l'évaluation diminue en partant du centre du champ vers le bord de celui-ci.

3. Procédé selon la revendication 1, caractérisé en ce que l'évaluation est effectuée selon une fonction triangulaire.

4. Procédé selon la revendication 2, caractérisé en ce que l'évaluation est effectuée selon une fonction:

$$Y = \frac{\sin X}{X}$$

5. Procédé selon la revendication 1, caractérisé en ce que tous les signaux d'image fine des points d'image fine du champ d'image sont évalués avec à peu près le même facteur.

6. Procédé selon la revendication 5, caractérisé en ce que les signaux d'image fine des points d'image fine du champ d'image sont évalués avec le même facteur.

7. Dispositif pour la mise en œuvre du procédé selon la revendication 1 avec des mémoires (1, 2, 3, 4) pour les signaux d'extraits de couleurs mis sous forme numérique et balayés avec une résolution fine, dispositif caractérisé en ce que les mémoires d'extraits de couleurs sont respectivement reliées par l'intermédiaire d'une première mémoire intermédiaire (8) à une entrée d'un multiplicateur (12), à la seconde entrée duquel est raccordée une seconde mémoire intermédiaire (10) dont l'entrée est reliée à une autre mémoire (11) qui contient les facteurs d'évaluation pour les différents points d'image du champ entourant le point d'image grossière, en ce que la sortie du multiplicateur (12) est reliée à une entrée d'un totalisateur (13) dont la sortie est appliquée à l'entrée d'une troisième mémoire intermédiaire (14) dont la sortie est reliée à une mémoire (7) recevant l'image grossière et à la seconde entrée du totalisateur (13), et en ce que les mémoires (1, 2, 3, 4) et les mémoires intermédiaires (8, 10, 14) sont raccordées par leurs entrées de synchronisation à un mécanisme de commande (9) par l'intermédiaire des impulsions duquel, pour obtenir les points d'image grossière, les signaux d'image des points d'image de l'image fine, qui se situent à l'intérieur du champ entourant le point d'image grossière, sont susceptibles d'être transmis à partir des mémoires d'extraits d'image (1, 2, 3 et 4) respectivement dans la première mémoire intermédiaire (8) de même que les facteurs d'évaluation appartenant aux différents points d'image de ce champ sont susceptibles d'être transmis à partir de la seconde mémoire (11) dans la seconde mémoire intermédiaire (10), et sont susceptibles d'être connectés à partir de la première et de la seconde mémoires intermédiaires (8, 10) au multiplicateur (12), et par l'intermédiaire desquelles les signaux de sortie du totalisateur (13) reliés au multiplicateur sont susceptibles d'être transmis dans la troisième mémoire intermédiaire et d'être transmis à partir de cette troisième mémoire intermédiaire (14) à la seconde entrée du totalisateur (13) et à la mémoire d'image grossière (7).

8. Dispositif selon la revendication 7, caractérisé en ce que la liaison entre la troisième mémoire intermédiaire (14) et la mémoire d'image grossière (7) n'est effectuée que pour les chiffres binaires de valeur significative élevée du signal de sortie de la troisième mémoire (14), afin de réduire le signal d'entrée pour la mémoire d'image grossière (7) à la valeur effective du signal d'image du point d'image grossière considéré.

9. Dispositif selon la revendication 7, caractérisé en ce que la liaison entre la mémoire d'image grossière (7) et le moniteur (6) n'est prévue que pour la transmission des chiffres binaires de valeur significative élevée du signal de sortie de la mémoire d'image grossière (7) au moniteur, afin de réduire le signal d'entrée du moniteur (6) à la valeur effective du signal d'image du point d'image grossière considéré.

Fig.1

Fig.2

Fig.3

Fig.4

Scanner — 5

M — 1
C — 2
Y — 3
K — 4

Grob= bild — 7

Monitor — 6

Steuer- Werk — 9

Faktor- Speicher — 11

| 4 | 12 | 12 | 4 |
|---|---|---|---|
| 12 | 36 | 36 | 12 |
| 12 | 36 | 36 | 12 |
| 4 | 12 | 12 | 4 |

0 095 514